# EUROPÄISCHE PATENTSCHRIFT

(11) **EP 4 512 294 B1**
(45) Veröffentlichungstag und Bekanntmachung des Hinweises auf die Patenterteilung: **29.04.2026**
(21) Anmeldenummer: 24184917.3
(22) Anmeldetag: 27.06.2024
(51) Int. Cl.: A47L 9/28

(54) **STEUEREINHEIT UND VERFAHREN ZUR ERMITTLUNG DER LAGE EINES STOSSFÄNGERS**
CONTROL UNIT AND METHOD FOR DETERMINING THE POSITION OF A BUMPER
UNITÉ DE COMMANDE ET PROCÉDÉ DE DÉTERMINATION DE LA POSITION D'UN PARE-CHOCS

(30) Priorität: 24.08.2023 DE 102023208117
(43) Veröffentlichungstag der Anmeldung: 26.02.2025
(73) Patentinhaber: BSH Hausgeräte GmbH, 81739 München (DE)
(72) Erfinder: Weidl, Manuel, 97616 Salz (DE); Schnitzer, Frank, 97616 Bad Neustadt (DE)

(56) Entgegenhaltungen:
- EP-A2- 4 223 200
- US-A1- 2014 124 004
- US-A1- 2022 167 815

## Beschreibung

Die Erfindung betrifft eine Reinigungsvorrichtung, insbesondere für einen Reinigungsroboter. Insbesondere betrifft die Erfindung eine Steuereinheit und ein Verfahren zur Ermittlung der Lage eines Stoßfängers einer Reinigungsvorrichtung.

Eine Reinigungsvorrichtung, insbesondere Saugvorrichtung, weist typischerweise eine Saugdüse mit einem Saugmund auf, über den mittels eines Luftstroms Verunreinigungen bzw. Schmutz, insbesondere Staubpartikel, von einem zu reinigenden Boden aufgesaugt werden. Der Luftstrom kann durch ein Gebläse bewirkt werden. Durch den Luftstrom wird der Schmutz von dem Saugmund in einen Schmutzsammelbehälter der Saugvorrichtung gefördert.

Die Reinigungsvorrichtung kann ausgebildet sein, sich autonom über den zu reinigenden Boden zu bewegen. Zu diesem Zweck kann die Reinigungsvorrichtung ein Fahrwerk aufweisen.

Eine Reinigungsvorrichtung, insbesondere ein Reinigungsroboter, kann einen beweglichen, insbesondere einen gefedert gelagerten, Stoßfänger (auf Englisch "Bumper") aufweisen, mit dem Stöße der Reinigungsvorrichtung gegen ein Hindernis erkannt und ggf. gedämpft werden können. Die Reinigungsvorrichtung kann ferner einen Stoßsensor aufweisen, mit dem die Auslenkung des Stoßfängers detektiert werden kann. Beispielhafte Stoßsensoren sind mechanische Tastsensoren und/oder Lichtschranken. Der Betrieb der Reinigungsvorrichtung kann in Abhängigkeit von den Sensordaten des Stoßsensors angepasst werden. Beispielsweise kann in Reaktion auf eine erkannte Auslenkung des Stoßfängers die Bewegungsrichtung der Reinigungsvorrichtung angepasst werden, um einem Hindernis auszuweichen.

Der Verbau eines dedizierten Stoßsensors ist mit erhöhten Kosten und mit einem erhöhten Bauraumbedarf verbunden. Das vorliegende Dokument befasst sich mit der technischen Aufgabe, die Auslenkung des Stoßfängers einer Reinigungsvorrichtung in besonders effizienter, zuverlässiger und präziser Weise zu detektieren. Eine Steuereinheit zur Ermittlung einer Lageinformation gemäß dem Oberbegriff des Anspruchs 1 ist z.B. aus EP-A-4223200 bekannt.

Die Aufgabe wird jeweils durch die Gegenstände der einzelnen unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt wird eine Steuereinheit zur Ermittlung einer Lageinformation in Bezug auf die Lage eines Stoßfängers beschrieben, der beweglich an einer Reinigungsvorrichtung gelagert ist. Die ermittelte Lageinformation bezieht sich somit auf die Lage des Stoßfängers. Insbesondere kann die Lageinformation die (räumliche) Lage des Stoßfängers (ggf. relativ zu der Reinigungsvorrichtung) angeben. Die (räumliche) Lage kann als Komponente die Position und/oder die Orientierung umfassen. Ggf. kann die Lage des Stoßfängers der (räumlichen) Pose des Stoßfängers entsprechen.

Der Stoßfänger kann ggf. ausgebildet sein, eine bestimmte Menge von unterschiedlichen räumlichen Lagen (insbesondere Posen) aufzuweisen. Die Lageinformation kann die Lage aus der Menge von unterschiedlichen räumlichen Lagen angeben, die der Stoßfänger aktuell aufweist.

Alternativ zu dem Begriff "Lageinformation in Bezug auf die Lage des Stoßfängers" kann in der Beschreibung und/oder in den Ansprüchen der Begriff "Lageinformation, die sich auf die Lage des Stoßfängers bezieht", oder der Begriff "Lageinformation, die die Lage des Stoßfängers angibt" verwendet werden.

Die Reinigungsvorrichtung kann insbesondere ein Reinigungsroboter sein, der ausgebildet ist, sich selbständig zu bewegen, um einen Reinigungsvorgang durchzuführen. Die Reinigungsvorrichtung umfasst typischerweise eine Reinigungseinheit zur Reinigung einer Fläche. Des Weiteren kann die Reinigungsvorrichtung eine Antriebseinheit umfassen, die ausgebildet ist, die Reinigungsvorrichtung zu bewegen (z.B. über die zu reinigende Fläche zu bewegen).

Die Steuereinheit ist eingerichtet, anhand einer Kamera der Reinigungsvorrichtung Bilddaten in Bezug auf ein oder mehrere Referenzpunkte zu erfassen, die (typischerweise fest) mit dem Stoßfänger verbunden sind. Die Kamera kann des Weiteren dazu verwendet werden, Bilddaten in Bezug auf das Umfeld der Reinigungsvorrichtung zu erfassen (z.B. in Bezug auf das Umfeld, das in Bewegungsrichtung vor der Reinigungsvorrichtung angeordnet ist). Die Bilddaten können z.B. dazu verwendet werden, Hindernisse im Umfeld der Reinigungsvorrichtung zu erkennen und/oder um eine automatische Navigation der Reinigungsvorrichtung zu ermöglichen.

Die Kamera kann derart in dem Gehäuse der Reinigungsvorrichtung angeordnet sein, dass die Kamera durch den Stoßfänger verdeckt wird (und die Kamera somit durch den Stoßfänger abgeschirmt wird). Der Stoßfänger kann innerhalb des Erfassungsbereichs der Kamera eine Öffnung aufweisen, sodass die Kamera befähigt ist, durch die Öffnung des Stoßfängers Bilddaten in Bezug auf das Umfeld der Reinigungsvorrichtung zu erfassen.

Die ein oder mehreren Referenzpunkte sind in dem Erfassungsbereich der Kamera angeordnet. Die ein oder mehreren Referenzpunkte können z.B. (zumindest teilweise) an dem nicht-transparenten Rand der Öffnung des Stoßfängers angeordnet sein. Insbesondere können die ein oder mehreren Referenzpunkte den nicht-transparenten Rand der Öffnung des Stoßfängers umfassen bzw. dem Rand der Öffnung entsprechen.

Die Öffnung des Stoßfängers kann mit einem (transparenten) Fenster bedeckt sein (z.B. um die Kamera vor Umwelteinflüssen zu schützen). Die ein oder mehreren Referenzpunkte können ein oder mehrere Markierungen auf dem Fenster umfassen.

Die einzelnen Referenzpunkte können jeweils eine bestimmte flächenförmige Ausdehnung aufweisen. Ferner können die einzelnen Referenzpunkte jeweils eine bestimmte Form und/oder ein bestimmtes Muster aufweisen. Die einzelnen Referenzpunkte können jeweils eine flächenförmige Ausdehnung aufweisen, die z.B. 0,5% oder weniger, oder 0,1% oder weniger der Gesamtfläche eines von der Kamera erfassten Bildes entspricht. Alternativ oder ergänzend können die einzelnen Referenzpunkte jeweils eine flächenförmige Ausdehnung aufweisen, sodass die einzelnen Referenzpunkte jeweils zumindest durch ein Pixel, bevorzugt jeweils zumindest durch Q Pixel, in einem von der Kamera erfassten Bild repräsentiert werden, z.B. mit Q≥2, oder Q≥10, etwa Q zwischen 10 und 50, oder Q zwischen 5 und 100.

Es können somit ein oder mehrere Referenzpunkte von der Kamera erfasst werden, wobei die ein oder mehreren Referenzpunkte derart ausgebildet sind, dass sich die Referenzpunkte zusammen mit dem Stoßfänger bewegen (sodass aus einer Bewegung der ein oder mehreren Referenzpunkte auf eine entsprechende Bewegung des Stoßfängers geschlossen werden kann). Dabei werden bevorzugt mehrere Referenzpunkte berücksichtigt, die an unterschiedlichen Stellen des Stoßfängers angeordnet sind, um die Genauigkeit der darauf basierend ermittelten Lageinformation in Bezug auf die Lage des Stoßfängers zu erhöhen.

Die Steuereinheit ist eingerichtet, die Lageinformation in Bezug auf die Lage des Stoßfängers auf Basis der Bilddaten, insbesondere auf Basis der in den Bilddaten dargestellten ein oder mehreren Referenzpunkten, zu ermitteln. Die Lageinformation kann die Position und/oder die Orientierung des Stoßfängers relativ zu dem Gehäuse der Reinigungsvorrichtung angeben. Insbesondere kann die Lageinformation die Pose des Stoßfängers (für einen Teil der 6 Freiheitsgrade und/oder für alle 6 Freiheitsgrade) relativ zu dem Gehäuse der Reinigungsvorrichtung angeben.

Als Lageinformation kann z.B. ermittelt werden, ob der Stoßfänger ausgehend von der Ruhelage des Stoßfängers eingedrückt wurde oder nicht. Diese Information kann z.B. in binärer Weise bereitgestellt werden (z.B. "eingedrückt" oder "nicht eingedrückt"). Ferner kann als Lageinformation ggf. ermittelt werden, in welcher Richtung der Stoßfänger eingedrückt wurde, z.B. frontal mittig, auf der rechten Seite oder auf der linken Seite des Stoßfängers.

Es kann z.B. eine bestimmte Menge von Zuständen des Stoßfängers definiert werden. Die einzelnen Zustände können jeweils eine bestimmte (räumliche) Lage des Stoßfängers definieren. Die Menge von Zuständen kann z.B. die Zustände: "Ruhelage", "mittig eingedrückt", "auf der rechten Seite eingedrückt" und/oder "auf der linken Seite eingedrückt" umfassen. Als Lageinformation kann ermittelt werden, in welchem Zustand aus der Menge von vordefinierten Zuständen sich der Stoßfänger aktuell befindet.

Alternativ oder ergänzend kann die Lageinformation die Position und/oder die Orientierung des Stoßfängers im Raum (relativ zu dem Gehäuse der Reinigungsvorrichtung) mit einer relativ hohen Werteauflösung (z.B. jeweils 2 oder mehr, oder 3 oder mehr, oder 4 oder mehr unterschiedliche Werte pro Freiheitsgrad) angeben.

Es kann somit eine Kamera dazu verwendet werden, um in effizienter und präziser Weise die Lage des Stoßfängers der Reinigungsvorrichtung zu ermitteln. Dabei kann insbesondere ermittelt werden, ob der Stoßfänger ausgehend von der Ruhelage des Stoßfängers ausgelenkt wurde oder nicht. Ferner kann ermittelt werden, in welcher Richtung (z.B. entlang der Längsrichtung und/oder entlang der Querrichtung der Reinigungsvorrichtung) der Stoßfänger ausgelenkt wurde. Die Verwendung der Bilddaten der Kamera ermöglicht es, auf den Verbau eines dedizierten Stoßsensors zu verzichten. Ferner kann die Lageinformation mit erhöhter Genauigkeit ermittelt werden.

Die Steuereinheit kann eingerichtet sein, die Reinigungsvorrichtung, insbesondere die Reinigungseinheit und/oder die Antriebseinheit der Reinigungsvorrichtung, in Abhängigkeit von der ermittelten Lageinformation zu betreiben. Aufgrund der Tatsache, dass die Lageinformation mit einer besonders hohen Genauigkeit ermittelt werden kann (sodass bereits relativ kleine Auslenkungen des Stoßfängers aus der Ruhelage heraus erkannt werden können), wird ein besonders zuverlässiger und schonender Betrieb der Reinigungsvorrichtung ermöglicht.

Die Bilddaten umfassen typischerweise zumindest ein Bild, in dem die ein oder mehreren Referenzpunkte dargestellt sind. Meist umfassen die Bilddaten eine zeitliche Sequenz von Bildern, in denen jeweils die ein oder mehreren Referenzpunkte dargestellt sind. Die einzelnen Bilder können jeweils in der beschriebenen Weise analysiert werden, um die Lageinformation in besonders präziser Weise und/oder als Funktion der Zeit zu ermitteln.

Die Steuereinheit kann eingerichtet sein, (durch Verwendung eines Bildanalyse-Algorithmus) ein oder mehrere Eigenschaften der in dem Bild dargestellten ein oder mehreren Referenzpunkte zu ermitteln. Beispielhafte Eigenschaften der einzelnen, in dem Bild dargestellten Referenzpunkte umfassen:
- die Position des Referenzpunktes innerhalb des Bildes;
- die Größe des dargestellten Referenzpunktes; und/oder
- die Form und/oder das Muster des dargestellten Referenzpunktes.

Die Lageinformation kann in besonders präziser Weise auf Basis der ein oder mehreren ermittelten Eigenschaften der ein oder mehreren dargestellten Referenzpunkte ermittelt werden.

Die Steuereinheit kann eingerichtet sein, die Lageinformation in Bezug auf die Lage des Stoßfängers unter Verwendung einer vordefinierten Zuordnungsfunktion zu ermitteln. Die Zuordnungsfunktion kann ausgebildet sein, unterschiedlichen Kombinationen von ein oder mehreren Eigenschaften der ein oder mehreren Referenzpunkte unterschiedliche Lagen des Stoßfängers zuzuordnen. Die Zuordnungsfunktion kann z.B. eine Look-Up-Tabelle und/oder ein oder mehrere analytische Funktionen umfassen. Dabei können für 2 oder mehr, oder für 4 oder mehr, oder für 10 oder mehr, oder 100 oder mehr, oder 1000 oder mehr, oder 10000 oder mehr unterschiedliche Kombinationen jeweils die Lage des Stoßfängers angegeben werden. Durch die Verwendung einer im Vorfeld ermittelten Zuordnungsfunktion kann die Lageinformation während des Betriebs der Reinigungsvorrichtung in besonders präziser Weise ermittelt werden.

Die Steuereinheit kann eingerichtet sein, anhand der Kamera Referenz-Bilddaten in Bezug auf die ein oder mehreren Referenzpunkte zu erfassen, wenn sich der Stoßfänger in einer Referenzlage, insbesondere in der Ruhelage, befindet. Des Weiteren kann die Steuereinheit eingerichtet sein, die Zuordnungsfunktion (die dazu verwendet wird, die Lageinformation in Bezug auf die Lage des Stoßfängers auf Basis der Bilddaten zu ermitteln) auf Basis der Referenz-Bilddaten zu kalibrieren. Die Kalibrierung der Zuordnungsfunktion kann wiederholt, insbesondere nach einem Reset und/oder Neustart der Reinigungsvorrichtung und/oder vor Beginn eines Reinigungsvorgangs, etwa vor Beginn jedes einzelnen Reinigungsvorgangs, durchgeführt werden. Durch die (ggf. wiederholte) Kalibrierung der Zuordnungsfunktion kann die Lageinformation in Bezug auf die Lage des Stoßfängers dauerhaft mit einer besonders hohen Genauigkeit ermittelt werden.

Die Steuereinheit kann eingerichtet sein, zu bestimmen, dass eine Beleuchtungssituation vorliegt (z.B., weil die ein oder mehreren Referenzpunkte (etwa aufgrund von relativ schlechten Lichtverhältnissen) nicht in den erfassten Bilddaten erkannt werden können). In Reaktion auf das Bestimmen kann bewirkt werden, dass die ein oder mehreren Referenzpunkte durch ein oder mehrere Leuchtelemente (z.B. LEDs) der Reinigungsvorrichtung beleuchtet werden. So kann auch bei Dunkelheit die Lageinformation in präziser Weise ermittelt werden.

Die von der Kamera erfassten Bilddaten können ein Gesamtbild umfassen, in dem die ein oder mehreren Referenzpunkte und das Umfeld der Reinigungsvorrichtung dargestellt sind. Die Steuereinheit kann eingerichtet sein, das Gesamtbild zu beschneiden, um ein Teilbild bereitzustellen, in dem das Umfeld der Reinigungsvorrichtung aber nicht die ein oder mehreren Referenzpunkte dargestellt sind. Zu diesem Zweck sind die ein oder mehreren Referenzpunkte bevorzugt an dem Rand des Gesamtbildes angeordnet. Es kann dann bewirkt werden, dass das Teilbild (und nicht das Gesamtbild) einem Nutzer der Reinigungsvorrichtung bereitgestellt wird. So kann ein besonders komfortabler Betrieb der Reinigungsvorrichtung ermöglicht werden (auch dann, wenn die Bilddaten zur Ermittlung der Lageinformation verwendet werden).

Gemäß einem weiteren Aspekt wird eine Reinigungsvorrichtung, insbesondere ein Reinigungsroboter, beschrieben. Die Reinigungsvorrichtung umfasst eine Reinigungseinheit, die eingerichtet ist, eine Fläche zu reinigen, z.B. eine Fläche auf der die Reinigungsvorrichtung angeordnet ist und/oder auf der sich die Reinigungsvorrichtung bewegt. Die Reinigungsvorrichtung umfasst ferner einen an dem Gehäuse der Reinigungsvorrichtung beweglich gelagerten Stoßfänger, sowie eine Kamera, die eingerichtet ist, Bilddaten, insbesondere Bilddaten in Bezug auf das Umfeld der Reinigungsvorrichtung, zu erfassen. Des Weiteren umfasst die Reinigungsvorrichtung eine Steuereinheit, die eingerichtet ist, eine Lageinformation in Bezug auf die Lage des Stoßfängers zu ermitteln (und die wie in diesem Dokument beschrieben ausgebildet ist).

Gemäß einem weiteren Aspekt wird ein Verfahren zur Ermittlung einer Lageinformation in Bezug auf die (räumliche) Lage (insbesondere die Pose) eines Stoßfängers beschrieben, der beweglich an einer Reinigungsvorrichtung gelagert ist. Das Verfahren umfasst das Erfassen, anhand einer Kamera der Reinigungsvorrichtung, von Bilddaten in Bezug auf ein oder mehrere Referenzpunkte, die mit dem Stoßfänger verbunden sind. Des Weiteren umfasst das Verfahren das Ermitteln der Lageinformation in Bezug auf die Lage des Stoßfängers auf Basis der Bilddaten.

Es ist zu beachten, dass jegliche Aspekte der in diesem Dokument beschriebenen Steuereinheit und/oder der in diesem Dokument beschriebenen Reinigungsvorrichtung und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figuren 1a und 1b einen beispielhaften Reinigungsroboter als Beispiel für eine Reinigungs- und/oder Saugvorrichtung in einer perspektivischen Ansicht;
Figur 1c beispielhafte Komponenten einer Reinigungsvorrichtung;
Figur 2 einen beispielhaften Erfassungsbereich einer Kamera;
Figur 3a ein beispielhaftes Stoßfänger-Fenster mit mehreren Referenzpunkten;
Figur 3b beispielhafte Referenzpunkte; und
Figur 4 ein Ablaufdiagramm eines beispielhaften Verfahrens zur Ermittlung der Lage eines Stoßfängers.

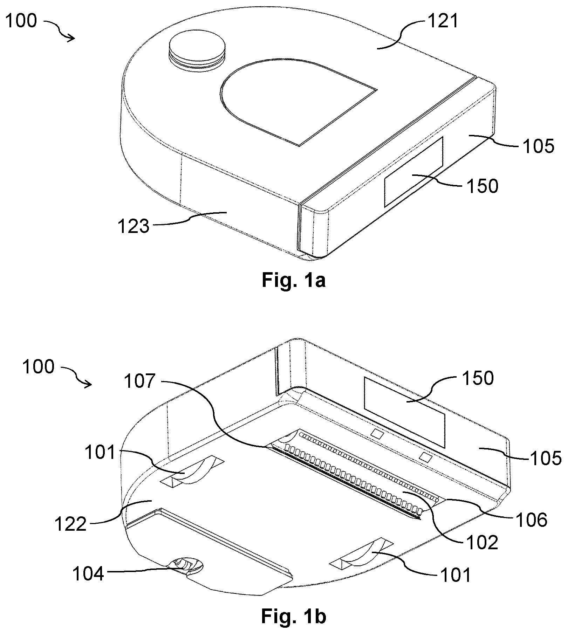

Wie eingangs dargelegt, befasst sich das vorliegende Dokument mit der effizienten und zuverlässigen Ermittlung der Lage des Stoßfängers einer Reinigungsvorrichtung. In diesem Zusammenhang zeigen Fig. 1a die Oberseite 121 und Fig. 1b die Unterseite 122 eines Reinigungsroboters 100 als Beispiel für eine Reinigungsvorrichtung, insbesondere als Beispiel für eine Saugvorrichtung. Die spezifisch für einen Reinigungsroboter beschriebenen Aspekte gelten allgemein für eine Reinigungsvorrichtung.

Die Unterseite 122 ist im Reinigungsbetrieb des Reinigungsroboters 100 dem zu reinigenden Boden bzw. der zu reinigenden Fläche eines Reinigungsbereichs, etwa eines Raumes, zugewandt. Die Unterseite 122 des Reinigungsroboters 100 weist typischerweise ein oder mehrere Antriebseinheiten 101 (mit ein oder mehreren Antriebsrädern) auf, durch die sich der Reinigungsroboter 100 selbständig bewegen kann, um unterschiedliche Bereiche eines Bodens zu reinigen. Des Weiteren kann der Reinigungsroboter 100 ein oder mehrere Führungs- und/oder Stützelemente 104 (z.B. nicht angetriebene Räder) aufweisen, die eine stabile Bewegung des Reinigungsroboters 100 über den zu reinigenden Boden ermöglichen. Außerdem umfasst ein Reinigungsroboter 100 typischerweise ein oder mehrere Reinigungseinheiten 106 (insbesondere Saugdüsen), die eingerichtet sind, den Boden unter dem Reinigungsroboter 100 zu reinigen.

Eine Reinigungseinheit 106 (insbesondere eine Saugdüse) kann eine Bürstenwalze 102 aufweisen, die ausgebildet ist, sich um eine Rotationsachse zu drehen, wobei die Rotationsachse typischerweise parallel zu der Unterseite 122 des Reinigungsroboters 100 angeordnet ist. Die Bürstenwalze 102 kann dazu verwendet werden, Staub und/oder Verunreinigungen auf dem zu reinigenden Boden mechanisch von dem Boden zu lösen, so dass der Staub und/oder die Verunreinigungen mit erhöhter Zuverlässigkeit in den Saugmund 107 der Reinigungseinheit 106 gesogen werden können.

An der Oberseite 121 des Reinigungsroboters 100 kann eine Benutzerschnittstelle angeordnet sein, die es einem Nutzer des Reinigungsroboters 100 ermöglicht, Steuereingaben zu tätigen. Außerdem kann der Reinigungsroboter 100 an einer Seitenwand 123 (z.B. an einer Seitenwand 123 im Frontbereich des Reinigungsroboters 100) einen Stoßfänger 105 umfassen, wobei an dem Stoßfänger 105 ein Stoßsensor angeordnet sein kann, der eingerichtet ist, Sensordaten zu erfassen, die anzeigen, ob der Reinigungsroboter 100 (z.B. in Bewegungsrichtung 120 und/oder bei einer Drehung und/oder bei einer Kurvenfahrt) gegen ein Hindernis gestoßen ist oder nicht. Das Auslösen des Stoßsensors (aufgrund der Auslenkung des Stoßfängers 105) durch ein Hindernis kann bewirken, dass sich der Reinigungsroboter 100 z.B. um seine, senkrecht auf dem Boden stehende, Vertikal- bzw. Hochachse dreht, und dadurch die Bewegungsrichtung 120 ändert, um dem Hindernis auszuweichen.

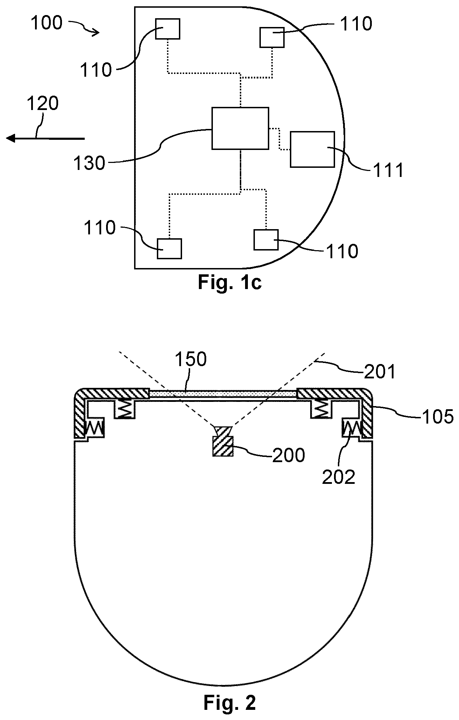

Des Weiteren weist ein Reinigungsroboter 100 typischerweise ein oder mehrere Umfeldsensoren 110 auf (siehe Fig. 1c), die eingerichtet sind, Umfeld- bzw. Sensordaten in Bezug auf das Umfeld des Reinigungsroboters 100 zu erfassen. Die ein oder mehreren Umfeldsensoren 110 können umfassen: eine oder mehrere Bildkameras, ein oder mehrere Ultraschallsensoren, ein oder mehrere taktile und/oder optische Abstandssensoren, ein oder mehrere akustische Sensoren, ein oder mehrere Temperatursensoren, ein oder mehrere Lidar- und/oder Radarsensoren, etc. Eine Steuereinheit 130 des Reinigungsroboters 100 kann eingerichtet sein, auf Basis der Umfelddaten digitale Karteninformation in Bezug auf den zu reinigenden Reinigungsbereich zu ermitteln und ggf. auf einer Speichereinheit 111 des Reinigungsroboters 100 zu speichern. Der Reinigungsroboter 100 kann die digitale Karteninformation nutzen, um sich innerhalb des Reinigungsbereichs (z.B. innerhalb eines Raums) zu orientieren und/oder um eine Fahrroute zur Reinigung des Reinigungsbereichs festzulegen.

Der Reinigungsroboter 100 kann als Umfeldsensor 110 insbesondere eine Kamera umfassen, die eingerichtet ist, Bilddaten in Bezug auf das Umfeld des Reinigungsroboters 100 zu erfassen. Die Kamera kann z.B. hinter einem Schutzfenster 150 verbaut sein, wobei das Schutzfenster 150 in den Stoßfänger 105 integriert sein kann. Fig. 2 zeigt eine beispielhafte Kamera 200 mit einem bestimmten Erfassungsbereich (insbesondere Sichtbereich) 201, wobei das Schutzfenster 150 (zumindest teilweise oder vollständig) innerhalb des Erfassungsbereichs 201 der Kamera 200 angeordnet ist. Des Weiteren zeigt Fig. 2 einen Stoßfänger 105, der beweglich an dem Reinigungsroboter 100 gelagert ist, z.B. über ein oder mehrere Federelemente 202.

Eine Kamera 200, die das Umfeld des Reinigungsroboters 100 durch ein Fenster 150 erfasst, das mit dem Stoßfänger 105 verbunden ist, kann dazu verwendet werden, in effizienter und präziser Weise Lageinformation in Bezug auf die Lage des Stoßfängers 105 zu ermitteln. Dies ermöglicht es ferner, auf den Verbau eines zusätzlichen Stoßsensors zu verzichten.

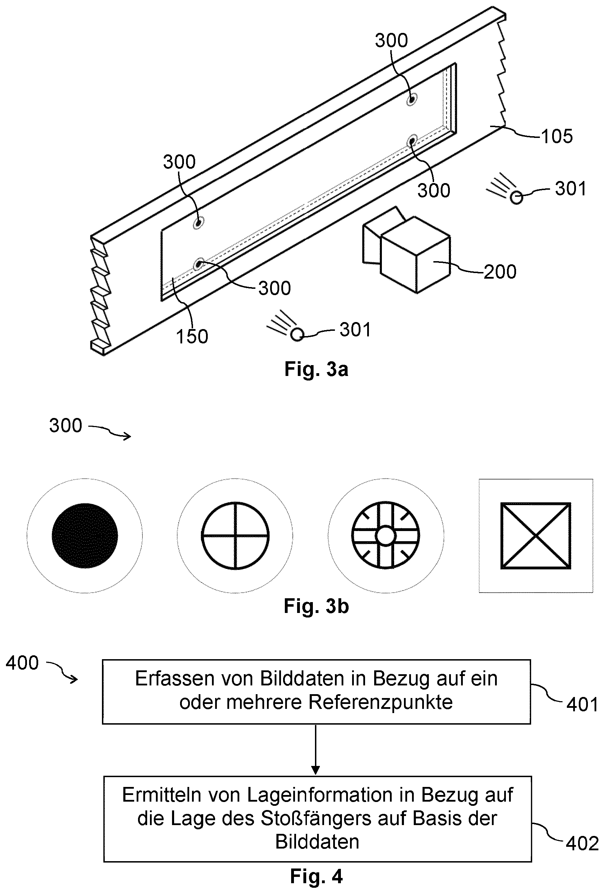

Wie beispielhaft in Fig. 3a dargestellt, kann eine Vielzahl von Referenzpunkten 300 in dem Erfassungsbereich 201 der Kamera 200 angeordnet werden. Ein Referenzpunkt 300 kann z.B. auf dem Fenster 150 angeordnet sein, z.B. als Markierung auf dem Fenster. Alternativ oder ergänzend kann ein Referenzpunkt an dem Rahmen des Fensters 150 angeordnet sein oder durch den Rahmen des Fensters 150 gebildet werden. In dem in Fig. 3a dargestellten Beispiel sind vier Referenzpunkte 300 als Markierungen an jeweils unterschiedlichen Stellen auf dem Fenster 150 angeordnet. Die einzelnen Referenzpunkte 300 sind dadurch fest mit dem Stoßfänger 105 verbunden, sodass eine Änderung der Lage des Stoßfängers 105 zu einer entsprechenden Änderung der Lage der Referenzpunkte 300 führt.

Die einzelnen Referenzpunkte 300 können derart ausgebildet sein, dass die Referenzpunkte 300 auch bei Dunkelheit von der Kamera 200 erfasst werden können. Zu diesem Zweck kann der Reinigungsroboter 100 ein oder mehrere Leuchtelemente 301 umfassen, die ausgebildet sind, die ein oder mehreren Referenzpunkte 300 zu beleuchten.

Fig. 3b zeigt beispielhafte Ausgestaltungen von Referenzpunkten 300. Die einzelnen Referenzpunkte 300 sind bevorzugt derart ausgebildet, dass die einzelnen Referenzpunkte 300 in zuverlässiger Weise innerhalb der von der Kamera 200 erfassten Bilder erkannt werden können.

Die Steuereinheit 130 des Reinigungsroboters 100 kann eingerichtet sein, anhand der Kamera 200 ein oder mehrere Bilder in Bezug auf die mit dem Stoßfänger 105 verbundenen Referenzpunkte 300 zu erfassen. Die ein oder mehreren Bilder können anhand eines Bildanalyse-Algorithmus analysiert werden, um ein oder mehrere Eigenschaften (insbesondere die Position und/oder die Größe) der Referenzpunkte 300 innerhalb der ein oder mehreren erfassten Bilder zu ermitteln. Aus den ein oder mehreren Eigenschaften der Referenzpunkte 300 kann wiederum auf die Lage des Stoßfängers 105 geschlossen werden.

Es kann somit die Frontkamera 200 eines Reinigungsroboters 100 (allgemein einer Reinigungsvorrichtung) dazu genutzt wird, die durch eine Kollision ausgelöste Bewegung des Bumpers 105 (d.h. des Stoßfängers) zu erkennen und/oder auszuwerten. Die Kamera 200 kann dazu Markierungen 300 (d.h. Referenzpunkte) an einem Fenster 150 im Bumper 105 verfolgen, aus deren Positionen die Lage des Bumpers 105 abgeleitet werden kann. Alternativ oder ergänzend kann anstelle von Markierungen 300 auf dem Fenster die Pose des Fensterrahmens selbst von der Kamera 200 verfolgt werden. Der Fensterrahmen stellt dann eine Menge von Referenzpunkten 300 dar.

Der Reinigungsroboter 100 kann eine Trockenreinigungseinheit 106 (mit Sauggebläse, Filter, Staubbehälter, Saugmund 107, und/oder Bürstenwalze 102) und/oder eine Nassreinigungseinheit (mit Wassertank, Pumpe, und/oder Wischpad) umfassen. Im vorderen Bereich des Reinigungsroboters 100 ist mindestens eine Kamera 200 untergebracht, die z.B. für Video-Streaming, Umweltkartierung und/oder Objekterkennung eingesetzt werden kann. Beim Video-Streaming kann der Nutzer live verfolgen, was der Reinigungsroboter 100 gerade vor sich sieht. Die Kartierung wird durchgeführt, um die Umgebung des Reinigungsroboters 100 zu vermessen und beispielsweise die Lage und Größe von zu reinigenden Räumen zu bestimmen. Die Objekterkennung dient dem Erfassen, Auswerten und/oder Klassifizieren von Objekten und Hindernissen vor dem Reinigungsroboter 100, um beispielsweise Schuhen, Kabeln oder Stuhlbeinen ausweichen zu können.

Die Front des Reinigungsroboters 100 wird durch einen Bumper 105 gebildet, der verschiebbar am Gehäuse des Reinigungsroboters 100 befestigt ist. Im Bumper 105 ist typischerweise, im Sichtkegel 201 der Kamera 200, ein durchsichtiges Fenster 150 integriert. Bei Verwendung von Markierungen 300 auf dem Fenster 150 bleibt typischerweise auch bei einer Bewegung des Bumpers 105 gegenüber dem Gehäuse des Reinigungsroboters 100, das heißt bei einer Relativbewegung des Bumpers 105 gegenüber der Kamera 200, der Sichtkegel 201 der Kamera 200 innerhalb der Fläche des durchsichtigen Fensters 150. Wird hingegen der Fensterrahmen für die Erfassung der Bewegung des Bumpers 105 genutzt, so ist dieser zumindest in der Neutralstellung bevorzugt vollständig im Sichtkegel 201 der Kamera 200 angeordnet.

Der Bumper 105 kann von vier Federn 202 (z. B. Druckfedern, Blattfedern o.ä.) in einer Ausgangs- bzw. Ruhelage gehalten werden. Bei Kollision mit einem Hindernis wird der Bumper 105 entgegen den Federkräften an das Gehäuse des Reinigungsroboters 100 gedrückt. Der Bumper 105 kann sich dabei ggf. in drei Freiheitsgraden bewegen:
- Fährt der Reinigungsroboter 100 frontal auf ein zentral vor ihm liegendes oder relativ breites Hindernis zu, so wird der Bumper 105 nach hinten an den Reinigungsroboter 100 gedrückt. Der Bumper 105 bewegt sich dabei vorwiegend entgegen der Längsrichtung 120 des Reinigungsroboters 100.
- Dreht sich der Reinigungsroboter 100 auf der Stelle, kann ein Hindernis den Bumper 105 seitlich an den Reinigungsroboter 100 drücken. Der Bumper 105 bewegt sich dabei vorwiegend in einer Querrichtung zum Reinigungsroboter 100 (quer zu der Längsrichtung 120).
- Fährt der Reinigungsroboter 100 auf ein seitlich versetztes Hindernis zu, so wird der Bumper 105 nur auf einer Seite nach hinten gedrückt. Der Bumper 105 dreht sich dabei leicht um die Hochachse des Reinigungsroboters 100 (die senkrecht zu dem zu reinigenden Boden angeordnet ist).

Bei einer Umsetzung mittels Markierungen 300 auf dem Fenster 150 ist das durchsichtige Fenster 150 im Bumper 105 mit mindestens einer Markierung 300 versehen. Die ein oder mehreren Markierungen 300 können als Sticker aufgeklebt, als Lackierung aufgebracht oder mittels Laser oder Graviermaschine eingraviert werden. Die ein oder mehreren Markierungen 300 liegen innerhalb des Sichtbereichs 201 der Kamera 200, sodass aus den Bilddaten der Kamera 200 die Markierungen 300 auslesbar sind.

Objekte im Raum, die hinter einer Markierung 300 liegen, werden von der Markierung 300 (teilweise) verdeckt. Die ein oder mehreren Markierungen 300 sind daher bevorzugt relativ klein und bevorzugt in dem Randbereich des von der Kamera 200 erfassten Bildes positioniert. Für ein Video-Streaming oder für Foto-Aufnahmen mit der Kamera 200 des Reinigungsroboters 100 können die Bildränder des jeweils erfassten Bildes beschnitten werden, um die ein oder mehreren Markierungen 300 aus den einzelnen Bildern zu entfernen, und um somit zu vermeiden, dass der Nutzer durch die ein oder mehreren Markierungen 300 gestört wird.

Die ein oder mehreren Markierungen 300 können beliebige Formen, Größen und/oder Ausgestaltungen annehmen. Bevorzugt sind die ein oder mehreren Markierungen 300 nicht größer als für die Auflösung und/oder die Bildschärfe der Kamera 200 erforderlich. Die ein oder mehreren Markierungen 300 sind bevorzugt so gestaltet, dass ein entsprechender Bildverarbeitungsalgorithmus die ein oder mehreren Markierungen 300 sicher in den (von der Kamera 200 erfassten) Bilddaten detektieren und/oder verfolgen kann, deren genaue Position feststellen kann und/oder - je nach Umsetzung - deren Größe oder deren Verformung in den Bilddaten ermitteln kann. Dabei kann es sich um eine optische Verformung von ein oder mehreren Markierungen 300 handeln, die sich dadurch ergibt, dass die räumliche Lage der ein oder mehreren Markierungen 300 relativ zu der Kamera 102 verändert wird.

Die ein oder mehreren Markierungen 300 können jeweils mit einem Rand versehen werden, der die einzelnen Markierungen 300 in besonders signifikanter Weise von einem Bildhintergrund abhebt. Dies kann ein einfacher, gleichmäßig einfarbiger, beispielsweise weißer, Rand sein.

Der Fokusbereich der eingesetzten Kamera 200 beginnt im Allgemeinen erst in einer gewissen Entfernung vor dem Bumper 105. Dies kann dazu führen, dass die ein oder mehreren Markierungen 300 von der Kamera 200 nicht scharf aufgelöst werden können. Für einen Bildanalyse-Algorithmus ist es typischerweise möglich, die ein oder mehreren Markierungen 300 auch bei einer gewissen Unschärfe zu erkennen, insbesondere dann, wenn die Strukturen auf den ein oder mehreren Markierungen 300 ausreichend stark und/oder breit ausgeführt sind.

In der Umsetzungsform ist eine Markierung 300 ein einfarbiger, bspw. schwarzer, Kreis. Dessen Position lässt sich auch in einem relativ unscharfen Bild durch die Ermittlung des Flächenschwerpunktes aller zugeordneten Pixel in zuverlässiger Weise bestimmen und ermöglicht eine weitere Verkleinerung der Markierung 300. Der Rand um die Markierung 300 ermöglicht die Unterscheidung der relativ unscharfen Markierungskontur vom eigentlichen Bildinhalt (der typischerweise das Umfeld des Reinigungsroboters 100 dargestellt).

Alternativ oder ergänzend zu mehreren einzelnen (punktförmigen) und/oder örtlich lokalen Markierungen 300 im Randbereich des Bildes können relativ große und/oder linienförmige Strukturen verwendet werden, etwa Linien parallel zu den Bildkanten oder ein Rahmen in Form eines Viereckes, der das gesamte Bild umläuft.

Die Bestimmung der Bewegung des Bumpers 105 erfolgt durch die Auswertung der Markierungspositionen und gegebenenfalls deren Lage und/oder Größe. Eine seitliche Querbewegung des Bumpers 105 führt zu einer horizontalen Bewegung der Markierungen 300 (d.h. der Referenzpunkte), eine Längsbewegung des Bumpers 105 aufgrund eines frontalen Stoßes führt zu einer Verschiebung der Markierungen 300 (d.h. der Referenzpunkte) von der Bildmitte weg nach außen. Eine Drehung des Bumpers 105 um seine Hochachse führt (ggf. nur) auf der Seite des Bildes, auf der der Bumper 105 zum Reinigungsroboter 100 gedrückt wird, dazu, dass ein oder mehrere Markierungen 300 (d.h. Referenzpunkte) von der Bildmitte weg nach außen geschoben werden. Die Auswertung aller Bewegungsarten ist somit möglich, wenn Markierungen 300 in mehreren unterschiedlichen Bereichen des Bildes (z.B. am linken und rechten Rand) angeordnet sind.

Die minimale Anzahl an Markierungen 300 ist eins, insbesondere dann, wenn eine solche Markierung groß bzw. lang genug ist - etwa ein umlaufender Rahmen um das Bild. An einem Rahmen können z.B. die Eckpunkte verfolgt und/oder die Verläufe der Verbindungslinien ausgewertet werden.

Bei Nutzung von punktförmigen und/oder lokal begrenzten Markierungen 300 werden bevorzugt mindestens zwei Markierungen 300 verwendet (z.B. eine links und eine rechts im Bild). Eine erhöhte Sicherheit der Auswertung bzw. eine erhöhte Genauigkeit lässt sich durch Einsatz von mehr Markierungen, etwa 4 oder mehr, realisieren. Die Berechnung der Bumper-Bewegung kann unter Nutzung von ein oder mehreren Abbildungsgleichungen (allgemein als Zuordnungsfunktionen bezeichnet) erfolgen. Die Verschiebungen der Markierungen 300 in den Bilddaten geben dabei Rückschlüsse auf den Zustand, insbesondere auf die Lage, des Bumpers 105. Unter Einbeziehung mehrerer Markierungen 300 in den Bilddaten (oder mehrerer Eigenschaften von ein oder mehreren Markierungen 300) lässt sich die Lageinformation in Bezug auf bis zu 6 Freiheitsgrade ermitteln. Die für den Bumper 105 anwendbaren Freiheitsgrade lassen sich aus Geometriedaten für den Reinigungsroboter 100 extrahieren oder können als Randbedingungen in die Berechnungen einfließen. Alternativ oder ergänzend kann die Bestimmung der Bumper-Bewegung bzw. Bumper-Position mittels einer Look-Up-Tabelle erfolgen, in die zuvor verschiedene Konfigurationen von Bumper-Positionen und Markierungspositionen eingetragen wurden. Die Verschiebung einer Markierung 300 kann als Überlagerung verschiedener Fälle betrachtet werden, sodass bevorzugt stets mehrere Markierungen 300 gleichzeitig betrachtet werden, was in Form eines Matrizen-Gleichungssystems (d.h. allgemein durch eine Zuordnungsfunktion) erfolgen kann.

Alternativ oder ergänzend zur Verwendung von Markierungen 300 auf dem Fenster 150 kann die Größe des Fensters so gewählt werden, dass der das Fenster 150 umgebende, nicht durchsichtige, Bereich des Bumpers 105 - also der Fensterrahmen - im Erfassungsbereich 201 der Kamera 200 liegt. Die Erkennung der Bumper-Bewegung erfolgt hierbei z.B. analog zur Verwendung einer rechteckigen Markierung 300 im Randbereich des Fensters 150. Zur besseren Unterscheidbarkeit zwischen Fensterrahmen und Fensterbereich können ggf. beliebige Markierungen 300, z.B. eine rechteckige Linie auf dem Fensterrahmen, aufgebracht werden. Die Verwendung des Fensterrahmens hat den Vorteil, dass diese Art der Erkennung für den Nutzer nicht sichtbar ist und somit einen reduzierten Einfluss auf das äußere Erscheinungsbild des Reinigungsroboters 100 hat. Andererseits wird bei der Verwendung des Fensterrahmens ggf. die Größe des nutzbaren Bildes verringert.

Eine besonders hohe Genauigkeit bei der Bestimmung der aktuellen Position und/oder Lage des Bumpers 105 kann durch eine Kalibrierung bewirkt werden. Eine solche kann stattfinden, wenn der Reinigungsroboter 100 nach seiner Montage werksseitig überprüft wird. In einer Kalibrierroutine kann der Bumper 105 definiert eingedrückt werden, während die Kamera 200 die Verschiebung des Bumpers 105 misst. Auf diese Weise kann eine Look-Up-Tabelle ermittelt werden, und/oder es können Extrempositionen des Bumpers 105 ermittelt werden, sodass zwischen diesen interpoliert werden kann. Eine weitere Form der Kalibrierung kann bei jedem Start des Reinigungsroboters 100 (z.B. nach einem Neustart oder vor jedem Beginn eines Reinigungsauftrages) erfolgen. Der Reinigungsroboter 100 kalibriert hierbei die Ausgangs- und/oder Ruhelage des Bumpers 105 bzw. die zur Ausgangs- und/oder Ruhelage zugehörigen Positionen der Markierungen 300 im Bild der Kamera 200. So können eine Änderung der Federkennwerte der Federn 202 über die Lebensdauer, ein Verzug der Materialen des Gehäuses des Reinigungsroboters 100 und/oder des Bumpers 105 und/oder Änderungen durch zwischenzeitliche Demontagen und Montagen kompensiert werden.

Im Fall von Dunkelheit kann die Kamera 200 ihre Umgebung unter Umständen nicht mehr erfassen. Um dennoch die Bewegung des Bumpers 105 auswerten zu können, können die Markierungen 300 und/oder der Fensterrahmen (d.h. allgemein die Referenzpunkte 300) von innen beleuchtet werden. Dazu können ein oder mehrere LEDs 301 verwendet werden, die ggf. bereits auf der Platine der Kamera 200 oder der benachbarten Elektronik vorhanden sind. Die Markierungen 300 können z.B. weiß, grün, blau oder rot angestrahlt werden, sodass sich die Markierungen 300 ausreichend hell von dem Hintergrund abheben und somit erkannt werden können.

Fig. 4 zeigt ein Ablaufdiagramm eines (ggf. Computer-implementierten) Verfahrens 400 zur Ermittlung einer Lageinformation in Bezug auf die Lage eines Stoßfängers 105 (d.h. Bumpers), der beweglich an einer Reinigungsvorrichtung 100, insbesondere an einem Reinigungsroboter, gelagert ist. Das Verfahren 400 kann durch eine Steuereinheit 130 der Reinigungsvorrichtung 100 ausgeführt werden.

Das Verfahren 400 umfasst das Erfassen 401, anhand einer Kamera 200 der Reinigungsvorrichtung 100, von Bilddaten in Bezug auf ein oder mehrere Referenzpunkte 300, die mit dem Stoßfänger 105 verbunden sind. Beispielhafte Referenzpunkte 300 sind Markierungen auf einem Sichtfenster 150 des Stoßfängers 105 und/oder der Rahmen einer Sichtöffnung des Stoßfängers 105.

Das Verfahren 400 umfasst ferner das Ermitteln 402 der Lageinformation in Bezug auf die Lage des Stoßfängers 105 auf Basis der Bilddaten (typischerweise unter Verwendung einer im Vorfeld ermittelten und/oder kalibrierten Zuordnungsfunktion).

Durch die in diesem Dokument beschriebenen Maßnahmen kann auf den Verbau von dedizierten Bumpersensoren (Taster, Lichtschranken, etc.) verzichtet werden. So können die Anzahl der Teile des Reinigungsroboters 100, der Montageaufwand und/oder die Kosten reduziert werden. Des Weiteren kann das störende "Klick"-Geräusch, das bei Aktivierung von mechanischen Tastern erzeugt wird, vermieden werden.

Die Auswertung mittels Bildverarbeitung ermöglicht eine feingranulare oder stufenlose Positionsbestimmung. Insbesondere können mittels der Kamera 200 bereits relativ kleine Bewegungen des Bumpers 105 erfasst werden. Somit kann die Reaktionszeit des Reinigungsroboters 100 reduziert werden, und/oder es kann ein relativ früheres Abbremsen des Reinigungsroboters 100 bewirkt werden, wodurch die Anstoßkraft des Reinigungsroboters 100 und mögliche Beschädigungen verringert werden können.

Die Auswertung von mehreren Referenzpunkten 300 ermöglicht Rückschlüsse auf den Kollisionsort des Bumpers 105. So können besonders genaue Reaktionen des Reinigungsroboters 100 bewirkt werden.

Ferner wird ein Einbau des Bumpers 105 mit relativ hohen Toleranzen ermöglicht, da die Lage der Referenzpunkte 300 im Kamerabild nach der Montage oder bei einem Neustart des Reinigungsroboters 100 kalibriert werden kann.

Die vorliegende Erfindung ist nicht auf die gezeigten Ausführungsbeispiele beschränkt. Insbesondere ist zu beachten, dass die Beschreibung und die Figuren nur das Prinzip der in diesem Dokument beschriebenen Steuereinheit und/oder der in diesem Dokument beschriebenen Reinigungsvorrichtung und/oder des in diesem Dokument beschriebenen Verfahrens veranschaulichen sollen.

### Bezugszeichenliste

- 100: Reinigungsvorrichtung (Reinigungsroboter)
- 101: Antriebseinheit
- 102: Bürstenwalze
- 104: Führungs- und/oder Stützelement
- 105: Stoßfänger, Bumper
- 106: Reinigungseinheit / Saugdüse
- 107: Saugmund
- 110: Umfeldsensor
- 111: Speichereinheit
- 120: Bewegungsrichtung / Längsrichtung
- 121: Oberseite
- 122: Unterseite
- 123: Seitenwand
- 130: Steuereinheit
- 150: Fenster
- 200: Kamera
- 201: Erfassungsbereich (Kamera)
- 202: Federung
- 300: Referenzpunkt, Markierung
- 301: Leuchtelement
- 400: Verfahren zur Ermittlung der Lage eines Stoßfängers
- 401, 402: Verfahrensschritte

## Patentansprüche

1. Steuereinheit (130) zur Ermittlung einer Lageinformation in Bezug auf die Lage eines Stoßfängers (105), der beweglich an einer Reinigungsvorrichtung (100) gelagert ist; **dadurch gekennzeichnet, dass** die Steuereinheit (130) eingerichtet ist,
- anhand einer Kamera (200) der Reinigungsvorrichtung (100) Bilddaten in Bezug auf ein oder mehrere Referenzpunkte (300) zu erfassen, die fest mit dem Stoßfänger (105) verbunden sind; und
- die Lageinformation in Bezug auf die Lage des Stoßfängers (105) auf Basis der Bilddaten zu ermitteln.

2. Steuereinheit (130) gemäß Anspruch 1, wobei
- die Kamera (200) derart in einem Gehäuse der Reinigungsvorrichtung (100) angeordnet ist, dass die Kamera (200) durch den Stoßfänger (105) verdeckt wird;
- der Stoßfänger (105) innerhalb eines Erfassungsbereichs (201) der Kamera (200) eine Öffnung aufweist, sodass die Kamera (200) ausgebildet ist, durch die Öffnung des Stoßfängers (105) Bilddaten in Bezug auf ein Umfeld der Reinigungsvorrichtung (100) zu erfassen; und
- die ein oder mehreren Referenzpunkte (300) in dem Erfassungsbereich (201) der Kamera (200) angeordnet sind.

3. Steuereinheit (130) gemäß Anspruch 2, wobei
- die ein oder mehreren Referenzpunkte (300) an einem nicht-transparenten Rand der Öffnung des Stoßfängers (105) angeordnet sind; und/oder
- die ein oder mehreren Referenzpunkte (300) den nicht-transparenten Rand der Öffnung des Stoßfängers (105) umfassen.

4. Steuereinheit (130) gemäß einem der Ansprüche 2 bis 3, wobei
- die Öffnung des Stoßfängers (105) mit einem Fenster (150) bedeckt ist; und
- die ein oder mehreren Referenzpunkte (300) ein oder mehrere Markierungen auf dem Fenster (150) umfassen.

5. Steuereinheit (130) gemäß einem der vorhergehenden Ansprüche, wobei
- die Bilddaten zumindest ein Bild umfassen, in dem die ein oder mehreren Referenzpunkte (300) dargestellt sind; und
- die Steuereinheit (130) eingerichtet ist,
- ein oder mehrere Eigenschaften der in dem Bild dargestellten ein oder mehreren Referenzpunkte (300) zu ermitteln; und
- die Lageinformation auf Basis der ein oder mehreren ermittelten Eigenschaften zu ermitteln.

6. Steuereinheit (130) gemäß Anspruch 5, wobei die ein oder mehreren Eigenschaften eines in dem Bild dargestellten Referenzpunktes (300) umfassen:
- eine Position des Referenzpunktes (300) innerhalb des Bildes;
- eine Größe des dargestellten Referenzpunktes (300); und/oder
- eine Form des dargestellten Referenzpunktes (300).

7. Steuereinheit (130) gemäß einem der Ansprüche 5 bis 6, wobei
- die Steuereinheit (130) eingerichtet ist, die Lageinformation in Bezug auf die Lage des Stoßfängers (105) unter Verwendung einer vordefinierten Zuordnungsfunktion zu ermitteln;
- die Zuordnungsfunktion ausgebildet ist, unterschiedlichen Kombinationen von ein oder mehreren Eigenschaften der ein oder mehreren Referenzpunkte (300) unterschiedliche Lagen des Stoßfängers (105) zuzuordnen; und
- die Zuordnungsfunktion insbesondere eine Look-Up-Tabelle und/oder ein oder mehrere analytische Funktionen umfasst.

8. Steuereinheit (130) gemäß einem der vorhergehenden Ansprüche, wobei die Steuereinheit (130) eingerichtet ist,
- anhand der Kamera (200) Referenz-Bilddaten in Bezug auf die ein oder mehreren Referenzpunkte (300) zu erfassen, wenn sich der Stoßfänger (105) in einer Referenzlage, insbesondere in einer Ruhelage, befindet; und
- eine Zuordnungsfunktion, die dazu verwendet wird, die Lageinformation in Bezug auf die Lage des Stoßfängers (105) auf Basis der Bilddaten zu ermitteln, auf Basis der Referenz-Bilddaten zu kalibrieren.

9. Steuereinheit (130) gemäß Anspruch 8, wobei die Steuereinheit (130) eingerichtet ist, die Zuordnungsfunktion wiederholt, insbesondere nach einem Reset und/oder Neustart der Reinigungsvorrichtung (100) und/oder vor Beginn eines Reinigungsvorgangs, etwa vor Beginn jedes einzelnen Reinigungsvorgangs, zu kalibrieren.

10. Steuereinheit (130) gemäß einem der vorhergehenden Ansprüche, wobei die Steuereinheit (130) eingerichtet ist,
- zu bestimmen, dass eine Beleuchtungssituation vorliegt; und
- in Reaktion auf das Bestimmen zu bewirken, dass die ein oder mehreren Referenzpunkte (300) durch ein oder mehrere Leuchtelemente (301) der Reinigungsvorrichtung (100) beleuchtet werden.

11. Steuereinheit (130) gemäß einem der vorhergehenden Ansprüche, wobei
- die Bilddaten ein Gesamtbild umfassen, in dem die ein oder mehreren Referenzpunkte (300) und ein Umfeld der Reinigungsvorrichtung (100) dargestellt sind; und
- die Steuereinheit (130) eingerichtet ist,
- das Gesamtbild zu beschneiden, um ein Teilbild bereitzustellen, in dem das Umfeld der Reinigungsvorrichtung (100) aber nicht die ein oder mehreren Referenzpunkte (300) dargestellt sind; und
- zu bewirken, dass das Teilbild einem Nutzer der Reinigungsvorrichtung (100) bereitgestellt wird.

12. Steuereinheit (130) gemäß einem der vorhergehenden Ansprüche, wobei die Steuereinheit (130) eingerichtet ist, die Reinigungsvorrichtung (100), insbesondere eine Reinigungseinheit (106) und/oder eine Antriebseinheit (101) der Reinigungsvorrichtung (100), in Abhängigkeit von der ermittelten Lageinformation zu betreiben.

13. Steuereinheit (130) gemäß einem der vorhergehenden Ansprüche, wobei die Lageinformation umfasst,
- eine Position und/oder eine Orientierung des Stoßfängers (105) relativ zu einem Gehäuse der Reinigungsvorrichtung (100); und/oder
- eine Pose des Stoßfängers (105) relativ zu dem Gehäuse der Reinigungsvorrichtung (100).

14. Reinigungsvorrichtung (100) für einen Reinigungsroboter, die umfasst,
- eine Reinigungseinheit (106), die eingerichtet ist, eine Fläche zu reinigen, auf der der Reinigungsroboter (100) angeordnet ist;
- einen an einem Gehäuse der Reinigungsvorrichtung (100) beweglich gelagerten Stoßfänger (105);
- eine Kamera (200), die eingerichtet ist, Bilddaten, insbesondere Bilddaten in Bezug auf ein Umfeld der Reinigungsvorrichtung (100), zu erfassen; und
- eine Steuereinheit (130) gemäß einem der vorhergehenden Ansprüche, die eingerichtet ist, eine Lageinformation in Bezug auf eine Lage des Stoßfängers (105) zu ermitteln.

15. Verfahren (400) zur Ermittlung einer Lageinformation in Bezug auf die Lage eines Stoßfängers (105), der beweglich an einer Reinigungsvorrichtung (100) gelagert ist; wobei das Verfahren (400) umfasst,
- Erfassen (401), anhand einer Kamera (200) der Reinigungsvorrichtung (100), von Bilddaten in Bezug auf ein oder mehrere Referenzpunkte (300), die mit dem Stoßfänger (105) verbunden sind; und
- Ermitteln (402) der Lageinformation in Bezug auf die Lage des Stoßfängers (105) auf Basis der Bilddaten.

## Claims

1. Control unit (130) for ascertaining an item of location information in relation to the location of a bumper (105), which is mounted in a moveable manner on a cleaning apparatus (100); **characterised in that** the control unit (130) is configured
- to capture image data in relation to one or more reference points (300) that are permanently connected to the bumper (105), using a camera (200) of the cleaning apparatus (100); and
- to ascertain the location information in relation to the location of the bumper (105) on the basis of the image data.

2. Control unit (130) according to claim 1, wherein
- the camera (200) is arranged in a housing of the cleaning apparatus (100) in such a manner that the camera (200) is covered by the bumper (105);
- the bumper (105) has an opening within a capture region (201) of the camera (200), so that the camera (200) is embodied to capture image data in relation to a surrounding area of the cleaning apparatus (100) through the opening of the bumper (105); and
- the one or more reference points (300) are arranged in the capture region (201) of the camera (200).

3. Control unit (130) according to claim 2, wherein
- the one or more reference points (300) are arranged on a non-transparent edge of the opening of the bumper (105); and/or
- the one or more reference points (300) comprise the non-transparent edge of the opening of the bumper (105).

4. Control unit (130) according to one of claims 2 to 3, wherein
- the opening of the bumper (105) is covered by a window (150); and
- the one or more reference points (300) comprise one or more markings on the window (150).

5. Control unit (130) according to one of the preceding claims, wherein
- the image data comprises at least one image, in which one or more reference points (300) are shown; and
- the control unit (130) is configured
- to ascertain one or more properties of the one or more reference points (300) shown in the image; and
- to ascertain the location information on the basis of the one or more ascertained properties.

6. Control unit (130) according to claim 5, wherein the one or more properties of a reference point (300) shown in the image comprise:
- a position of the reference point (300) within the image;
- a size of the reference point (300) shown; and/or
- a shape of the reference point (300) shown.

7. Control unit (130) according to one of claims 5 to 6, wherein
- the control unit (130) is configured to ascertain the location information in relation to the location of the bumper (105) using a predefined assignment function;
- the assignment function is embodied to assign different locations of the bumper (105) to different combinations of one or more properties of the one or more reference points (300); and
- the assignment function in particular comprises a lookup table and/or one or more analytical functions.

8. Control unit (130) according to one of the preceding claims, wherein the control unit (130) is configured
- to capture reference image data in relation to the one or more reference points (300) using the camera (200), if the bumper (105) is located in a reference location, in particular in an idle location; and
- to calibrate an assignment function, which is used to ascertain the location information in relation to the location of the bumper (105) on the basis of the image data, using the reference image data.

9. Control unit (130) according to claim 8, wherein the control unit (130) is configured to calibrate the assignment function repeatedly, in particular following a reset and/or restart of the cleaning apparatus (100) and/or before beginning a cleaning procedure, for example before beginning each individual cleaning procedure.

10. Control unit (130) according to one of the preceding claims, wherein the control unit (130) is configured
- to determine that a lighting situation is present; and
- in response to the determination, to cause the one or more reference points (300) to be lit by one or more lighting elements (301) of the cleaning apparatus (100).

11. Control unit (130) according to one of the preceding claims, wherein
- the image data comprises an overall image, in which the one or more reference points (300) and a surrounding area of the cleaning apparatus (100) are shown; and
- the control unit (130) is configured
- to crop the overall image, in order to provide a partial image, in which the surrounding area of the cleaning apparatus (100) is shown, but the one or more reference points (300) are not; and
- to cause the partial image to be provided to a user of the cleaning apparatus (100).

12. Control unit (130) according to one of the preceding claims, wherein the control unit (130) is configured to operate the cleaning apparatus (100), in particular a cleaning unit (106) and/or a drive unit (101) of the cleaning apparatus (100), as a function of the ascertained location information.

13. Control unit (130) according to one of the preceding claims, wherein the location information comprises
- a position and/or an orientation of the bumper (105) relative to a housing of the cleaning apparatus (100); and/or
- a pose of the bumper (105) relative to the housing of the cleaning apparatus (100).

14. Cleaning apparatus (100) for a cleaning robot, which comprises
- a cleaning unit (106), which is configured to clean a surface on which the cleaning robot (100) is arranged;
- a bumper (105), which is mounted in a moveable manner on a housing of the cleaning apparatus (100);
- a camera (200), which is configured to capture image data, in particular image data in relation to a surrounding area of the cleaning apparatus (100); and
- a control unit (130) according to one of the preceding claims, which is configured to ascertain an item of location information in relation to a location of the bumper (105).

15. Method (400) for ascertaining an item of location information in relation to the location of a bumper (105), which is mounted in a moveable manner on a cleaning apparatus (100); wherein the method (400) comprises
- capturing (401) image data in relation to one or more reference points (300), which are connected to the bumper (105), using a camera (200) of the cleaning apparatus (100); and
- ascertaining (402) the location information in relation to the location of the bumper (105) on the basis of the image data.

## Revendications

1. Unité de commande (130) pour la détermination d'une information de positionnement relative au positionnement d'un pare-chocs (105) logé de façon mobile sur un dispositif de nettoyage (100) ; **caractérisée en ce que** l'unité de commande (130) est aménagée,
- pour acquérir, au moyen d'une caméra (200) du dispositif de nettoyage (100), des données sous forme d'images relatives à un ou plusieurs point(s) de référence (300) reliés de manière fixe au pare-chocs (105) ; et
- pour déterminer l'information de positionnement relative au positionnement du pare-chocs (105) sur la base des données sous forme d'images.

2. Unité de commande (130) selon la revendication 1, dans laquelle
- la caméra (200) est disposée de telle sorte dans un boîtier du dispositif de nettoyage (100) que le pare-chocs (105) masque la caméra (200) ;
- le pare-chocs (105) présente un orifice à l'intérieur d'une zone d'acquisition (201) de la caméra (200), de sorte que la caméra (200) est formée pour acquérir, à travers l'orifice du pare-chocs (105), des données sous forme d'images relatives à un environnement du dispositif de nettoyage (100) ; et
- le ou les plusieurs point(s) de référence (300) est/sont disposé(s) dans la zone d'acquisition (201) de la caméra (200).

3. Unité de commande (130) selon la revendication 2, dans laquelle
- le ou les plusieurs point(s) de référence (300) est/sont disposé(s) sur un bord non transparent de l'orifice du pare-chocs (105) ; et/ou
- le ou les plusieurs point(s) de référence (300) comprend/comprennent le bord non transparent de l'orifice du pare-chocs (105).

4. Unité de commande (130) selon l'une des revendications 2 à 3, dans laquelle
- une fenêtre (150) couvre l'orifice du pare-chocs (105) ;
- le ou les plusieurs point(s) de référence (300) comprend/comprennent un ou plusieurs repère(s) sur la fenêtre (150).

5. Unité de commande (130) selon l'une des revendications précédentes, dans laquelle
- les données sous forme d'images comprennent au moins une image dans laquelle le ou les plusieurs point(s) de référence (300) est/sont représenté(s) ; et
- l'unité de commande (130) est aménagée
- pour déterminer une ou plusieurs caractéristique(s) du ou des plusieurs point(s) de référence (300) représenté(s) dans l'image ; et
- pour déterminer l'information de positionnement sur la base d'une ou de plusieurs caractéristique(s) déterminée(s).

6. Unité de commande (130) selon la revendication 5, dans laquelle la ou les plusieurs caractéristique(s) d'un point de référence (300) représenté(s) dans l'image comprennent :
- une position du point de référence (300) à l'intérieur de l'image ;
- une taille du point de référence représenté (300) ; et/ou
- une forme du point de référence représenté (300).

7. Unité de commande (130) selon l'une des revendications 5 à 6, dans laquelle
- l'unité de commande (130) est aménagée pour déterminer l'information de positionnement relative au positionnement du pare-chocs (105) en utilisant une fonction d'affectation prédéfinie ;
- la fonction d'affectation est formée pour affecter différentes positions du pare-chocs (105) à différentes combinaisons d'une ou de plusieurs caractéristique(s) du ou des plusieurs point(s) de référence (300) ; et
- la fonction d'affectation comprend notamment une table de correspondance et/ou une ou plusieurs fonction(s) analytique(s).

8. Unité de commande (130) selon l'une des revendications précédentes, dans lequel l'unité de commande (130) est aménagée,
- pour acquérir, à l'aide de la caméra (200), des données sous forme d'images de référence relatives au(x) plusieurs point(s) de référence (300) lorsque le pare-chocs (105) se trouve dans une position de référence, en particulier dans une position de repos ; et
- pour calibrer une fonction d'affectation utilisée pour déterminer l'information de positionnement relative au positionnement du pare-chocs (105) sur la base des données sous forme d'images, sur la base des données sous forme d'images de référence.

9. Unité de commande (130) selon la revendication 8, dans laquelle l'unité de commande (130) est aménagée pour calibrer de manière répétée la fonction d'affectation, en particulier après une réinitialisation et/ou un redémarrage du dispositif de nettoyage (100) et/ou avant le début d'un processus de nettoyage, par exemple avant le début de chaque processus de nettoyage individuel.

10. Unité de commande (130) selon l'une des revendications précédentes, dans lequel l'unité de commande (130) est aménagée,
- pour déterminer qu'une situation d'éclairage existe ; et
- pour faire en sorte, en réponse à la détermination, que le ou les plusieurs point(s) de référence (300) soit/soient éclairé(s) par un ou plusieurs élément(s) lumineux (301) du dispositif de nettoyage (100).

11. Unité de commande (130) selon l'une des revendications précédentes, dans laquelle
- les données sous forme d'images comprennent une image globale dans laquelle le ou les plusieurs point(s) de référence (300) et un environnement du dispositif de nettoyage (100) sont représentés ; et
- l'unité de commande (130) est aménagée
- pour rogner l'image globale afin de fournir une image partielle dans laquelle l'environnement du dispositif de nettoyage (100) est représenté mais pas le ou les plusieurs point(s) de référence (300) ; et
- pour faire en sorte que l'image partielle soit mise à disposition d'un utilisateur du dispositif de nettoyage (100).

12. Unité de commande (130) selon l'une des revendications précédentes, dans laquelle l'unité de commande (130) est aménagée pour exploiter le dispositif de nettoyage (100), en particulier une unité de nettoyage (106) et/ou une unité d'entraînement (101) du dispositif de nettoyage (100), en fonction de l'information de positionnement déterminée.

13. Unité de commande (130) selon l'une des revendications précédentes, dans laquelle l'information de positionnement comprend,
- une position et/ou une orientation du pare-chocs (105) par rapport à un boîtier du dispositif de nettoyage (100) ; et/ou
- une pose du pare-chocs (105) par rapport au boîtier du dispositif de nettoyage (100).

14. Dispositif de nettoyage (100) pour un robot de nettoyage, comprenant,
- une unité de nettoyage (106) aménagée pour nettoyer une surface sur laquelle le robot de nettoyage (100) est disposé ;
- un pare-chocs (105) logé de façon mobile sur un boîtier du dispositif de nettoyage (100) ;
- une caméra (200) aménagée pour acquérir des données sous forme d'images, en particulier des données sous forme d'images relatives à un environnement du dispositif de nettoyage (100) ; et une unité de commande (130) selon l'une des revendications précédentes, qui est aménagée pour déterminer une information de positionnement relative à un positionnement du pare-chocs (105).

15. Procédé (400) pour la détermination d'une information de positionnement relative au positionnement d'un pare-chocs (105) logé de façon mobile sur un dispositif de nettoyage (100), dans lequel le procédé (400) comprend,
- l'acquisition (401), au moyen d'une caméra (200) du dispositif de nettoyage (100), de données sous forme d'images relatives à un ou plusieurs point(s) de référence (300) reliés au pare-chocs (105) ; et
- la détermination (402) de l'information de positionnement relative au positionnement du pare-chocs (105) sur la base des données sous forme d'images.
